# EUROPÄISCHE PATENTANMELDUNG

(11) **EP 1 020 262 A2**
(43) Veröffentlichungstag der Anmeldung: **19.07.2000**
(21) Anmeldenummer: 99890373.6
(22) Anmeldetag: 30.11.1999
(51) Int. Cl.: B27D 1/00, B27D 5/00

(54) **Verfahren und Vorrichtung zur Herstellung einer Profilleiste**

(30) Priorität: 15.01.1999 AT 4899
(71) Anmelder: Neuhofer, Franz, jun., 4893 Zell am Moos (AT)
(72) Erfinder: Neuhofer, Franz, jun., 4893 Zell am Moos (AT)
(74) Vertreter: Hübscher, Heiner, Dipl.-Ing.

(57) **Zusammenfassung**

Um eine echtholzfurnierte und dennoch hochverschleißveste Profilleiste (1) zu schaffen, besteht diese Profilleiste (1) aus einem sichtseitig beschichteten Profilkörper (2), dessen Beschichtung (3) aus einem mit einem Overlay verpreßten Echtholzfurnier besteht. Zur Herstellung dieser Leiste werden Furnierblätter aus Echtholz mit im wesentlichen geradliniger Jahrringzeichnung zu einer Furnierbahn zusammengesetzt und diese Furnierbahn an der Rückseite vlieskaschiert bzw. an der Vorderseite geschliffen und unter Hitze- und Druckeinwirkung overlaybeschichtet, worauf die Furnierbahn in Furnierstreifen geschnitten werden, welche Furnierstreifen auf die Sichtseite der vorgefertigten Profilkörper unter Druckeinwirkung aufgeklebt werden, wozu die Furnierstreifen vor dem Aufkleben erhitzt und während des Andrückens an die Profilkörper wieder abgekühlt werden.

## Beschreibung

Die Erfindung bezieht sich auf ein Verfahren zum Herstellen einer neuen Profilleiste, insbesondere Bodenleiste, die aus einem sichtseitig mit einer eine Furnierlage und eine transparente Decklage umfassenden Beschichtung versehenen Profilkörper besteht, nach dem eine aus Furnierblättern zusammengesetzte Furnierbahn nach einem Vlieskaschieren der einen Seite, der Rückseite, in Streifen mit einer an die Länge der sichtseitigen Profilkontur des Profilkörpers angepaßten Breite geschnitten wird, welche Furnierstreifen auf die Sichtseite der vorgefertigten Profilkörper unter Druckeinwirkung aufgeklebt werden sowie auf eine Vorrichtung zum Durchführen des Verfahrens.

Nach solchen Verfahren hergestellte Profilleisten weisen meist einen vorgefertigten Profilkörper aus einem Holzwerkstoff minderer Qualität auf und sind lediglich an ihrer Sichtseite furniert, um der Profilleiste das gewünschte Aussehen zu verleihen, wobei zum Schutz der Furnierlage eine transparente Decklage aus einer Lackschicht aufgebracht wird. Ein derartiges Verfahren zur Herstellung von Furnieren, die mit einem klebstoffgetränkten, getrockneten Trägermaterial zu einem flexiblen Verbund verklebt werden, worauf eine Vorbehandlung, wie Schleifen, Bleichen, Beizen und/oder Lackieren vorgenommen und der Verbund durch Aufbringen auf ein Substrat zu einem Furnierschichtaufbau ergänzt wird, ist aus der DE 41 35 658 A bekannt. Da entsprechend der Verwendung dieser Profilleisten als Abschluß- oder Sockelleisten und insbeson-dere als Bodenprofilleisten die Sichtseiten durch ein Anschlagen, Anstoßen, Betreten, Befahren od. dgl. einer erheblichen Beanspruchung ausgesetzt sind, wird die Lackschicht innerhalb recht kurzer Zeiten zerkratzt, abgeschlagen od. dgl. beschädigt und die Profilleisten unterliegen einem beträchtlichen Verschleiß.

Es gibt auch schon Overlays zur Erhöhung der Abriebfestigkeit von Laminatböden od. dgl., doch werden diese Overlays, das sind harzimprägnierte Spezialpapiere, die durch Druck- und Temperaturanwendung beim Verpressen mit dem Werkstück aushärten, bisher nur bei Werkstücken mit ebener Oberfläche und aus einem Material minimaler Quell- und Dehneigenschaften eingesetzt, da die Eigensteifigkeit der Overlays zu Schwierigkeiten bei einer formgebenden Verarbeitung führt und ein stärker quell- oder dehnbares Material, wie Echtholz, durch seine quell- oder dehnungsbedingte Eigenbewegung Oberflächenrisse verursacht. Der Einsatz von Overlays blieb daher bisher auch im wesentlichen auf das Beschichten von Laminatböden od. dgl. beschränkt.

Ein Verfahren zur Herstellung eines imprägnierten, trockenen, biegsamen Schichtstoffes zum Laminieren von Holzfurnieren ist aus der DE 14 19 139 A bekannt, wobei dieser Schichtstoff zwar auf alle typischen Kernmaterialien aufgebracht werden kann, diese Kernmaterialien müssen allerdings ebene und parallele Oberflächen aufweisen und von einheitlicher Kompressibilität sein.

Der Erfindung liegt demnach die Aufgabe zugrunde, ein Verfahren zur rationellen Herstellung von Profilleisten der eingangs geschilderten Art anzugeben, das die Herstellung besonders verschleißfester Profilleisten erlaubt. Darüber hinaus soll eine zweckmäßige Vorrichtung zum Durchführen des Verfahrens geschaffen werden.

Die Erfindung löst diese Aufgabe dadurch, daß Furnierblätter aus Echtholz mit vorzugsweise im wesentlichen geradliniger Jahrringzeichnung zur Furnierbahn aneinandergereiht werden, daß die Furnierbahn vor dem Streifenschneiden an der Vorderseite geschliffen und unter Hitze- und Druckeinwirkung overlaybeschichtet wird und daß dann die kaschierten und overlaybeschichteten Furnierstreifen vor dem Aufkleben auf die Profilkörper erhitzt und während des Andrückens an die Profilkörper wieder abgekühlt werden, wodurch sich eine echtholzfurnierte Profilleiste einwandfrei overlaybeschichten läßt. Nach diesem Verfahren hergestellte echtholzfurnierte und overlaybeschichtete Profilleisten besitzen das Aussehen einer Echtholzleiste und weisen overlaybedingt eine hochabriebfeste Oberfläche auf, so daß sie bestens für den Einsatz als Bodenprofile geeignet sind und auch höchsten Beanspruchungen standhalten.

Zum Herstellen furnierter Profilleisten werden einerseits die zu furnierenden Profilkörper vorgefertigt und anderseits Furnierstreifen vorbereitet, die dann auf die Sichtseite der Profilkörper aufzukleben sind. Dazu werden Furnierblätter zu Furnierbahnen zusammengesetzt und randseitig beschnitten, worauf die Furnierbahnen in Streifen entsprechender Breite zerschnitten werden. Dabei ist es bekannt, zur Verstärkung der Furnierstreifen die Furnierrückseite, beispielsweise mit einem leimgetränkten Viskosevlies, zu kaschieren. Durch eine Auswahl der Furnierblätter hinsichtlich der Jahrringzeichnung kann die Quell- und Dehnfähigkeit dieser Furnierblätter möglichst eingeschränkt werden und auch das Schleifen der Furnierbahn und die damit verringerte Furnierstärke beeinträchtigt das Quell- und Dehnungsverhalten des Furnieres. Das Schleifen selbst bringt darüber hinaus eine vollständig glatte Oberfläche des Furniers mit sich, die Voraussetzung für ein sauberes, hohlraumfreies Verpressen der Overlays ist, und die Kaschierung an der Rückseite und die Overlaybeschichtung an der Vorderseite sorgen für eine Vergleichmäßigung der Furnierbiege- und Festigkeitseigenschaften. Die so vorbereiteten Furnierstreifen müssen dann entsprechend erhitzt werden, um zum Aufkleben auf die profilierte Sichtfläche der Profilkörper ausreichend biegsam zu sein, worauf beim Andrücken der mit einem geeigneten Kleber rückseitig bestrichenen Furnierstreifen diese wieder soweit abzukühlen sind, daß die Overlaybeschichtung beim Aufpressen in ihrer der Profilkörperkontur entsprechenden Verformung aushärtet und es nach dem Aufpressen zu keinen Ablöseerscheinungen kommt. Wird daher ein geeignetes Furnier ausgewählt und nach dem erfindungsgemäßen Verfahren rück- und vorderseitig durch Kaschieren bzw. Schleifen und Beschichten vorbereitet, läßt sich dieses Furnier unter Beachtung der erforderlichen Wärmebehandlung zum Beschichten beliebig profilierter Profilkörper einsetzen und es entsteht eine Profilleiste mit einwandfrei furnierter und overlaybeschichteter Sichtseite.

Um das erfindungsgemäße Verfahren durchführen zu können, genügt eine Beschichtungsvorrichtung mit einem Maschinengestell, das eine sich von einem Werkstückzulauf zu einer Beschichtungsstation erstreckende Werkstückführung und eine Vorschubeinrichtung für den Werkstückvorschub aufnimmt, wobei die Beschichtungsstation oberhalb der Werkstückführung eine Spenderrolle für einen Furnierstreifen und eine der Streifenrückseite zugeordnete Kleberauftragseinrichtung sowie im Bereich der Werkstückführung eine Andrückeinrichtung zum Andrücken des Furnierstreifens an die Werkstücke umfaßt, wenn erfindungsgemäß in der Beschichtungsstation zwischen Spenderrolle und Andrückeinrichtung eine der Streifenvorderseite zugeordnete Heizeinrichtung vorgesehen ist und die Andrückeinrichtung Druckschuhe mit im Querschnitt an die zu beschichtende Profilkontur der Werkstücke angepaßten Druckflächen aufweisen, welche Druckschuhe mit einer Kühlvorrichtung zur Kühlung der Druckflächen ausgestattet sind. Mit dieser Vorrichtung können die Furnierstreifen gleichzeitig während des Längsvorschubes der Profilkörper durch die Beschichtungsstation kontinuierlich aufgebracht werden, wobei es vor dem Aufbringen zu einer Erwärmung des Furnierstreifens und dann beim Aufkleben auf die Profilkörper auf Grund der Druckschuhe zu einem großflächigen Andrücken des Furnierstreifens an die Profilform der Profilkörper kommt. Durch dieses Andrücken erfolgt nicht nur eine profilkonforme Verformung und eine gleichmäßige Druckbeaufschlagung des Furnierstreifens, sondern es steht auch eine ausreichende Kühlfläche für die Abkühlung des Furnierstreifens bis zur Aushärtung des Overlays zur Verfügung. Als Kühlvorrichtung eignen sich dabei Kühlkanäle innerhalb der Druckschuhe, die an einen Kühlflüssigkeitskreislauf angeschlossen werden und die vom Furnierstreifen auf die Druckflächen übertragene Wärme rasch abführen.

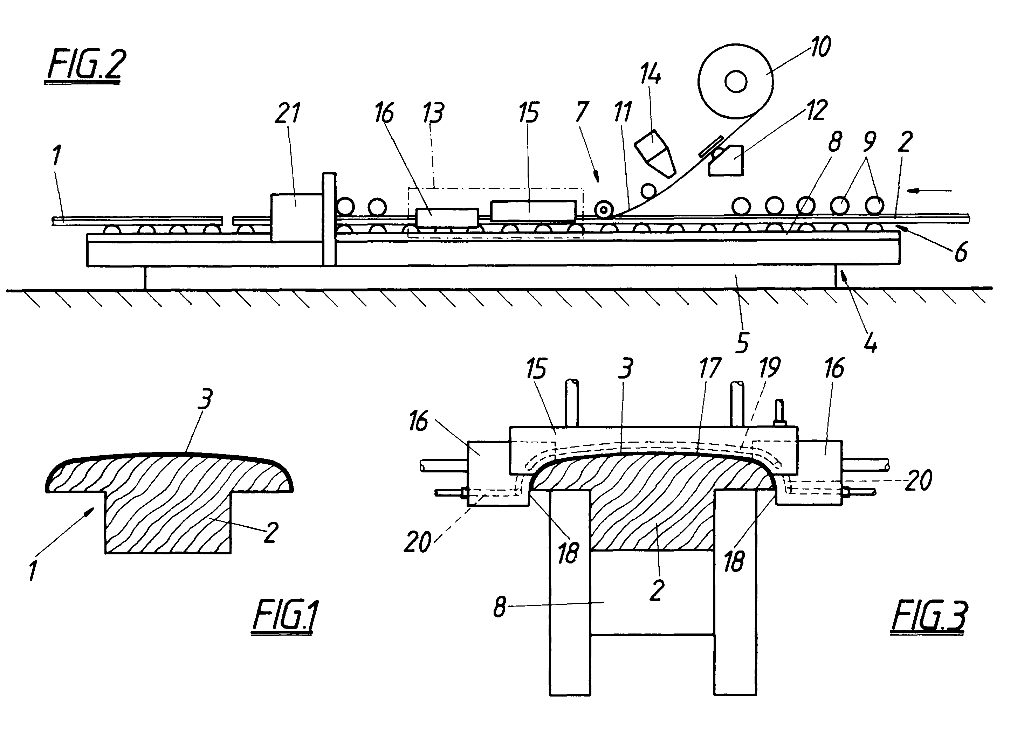

In der Zeichnung ist der Erfindungsgegenstand rein schematisch veranschaulicht, und zwar zeigen
- Fig. 1: eine erfindungsgemäße Profilleiste im Querschnitt,
- Fig. 2: eine erfindungsgemäße Vorrichtung zur Herstellung einer Profilleiste in Seitenansicht und
- Fig. 3: die Andrückeinrichtung dieser Vorrichtung in teilgeschnittener Stirnansicht größeren Maßstabes.

Eine Profilleiste 1, die insbesondere als Bodenleiste Verwendung findet, weist einen Profilkörper 2 mit einer Beschichtung 3 an der Sichtseite auf, welche Beschichtung 3 aus einem mit einem Overlay verpreßten Echtholzfurnier besteht.

Zur Herstellung dieser Profilleiste 1 gibt es eine Vorrichtung 4 mit einem Maschinengestell 5, das eine sich von einem Werkstückzulauf 6 zu einer Beschichtungsstation 7 erstreckende Werkstückführung 8 und eine Vorschubeinrichtung 9, beispielsweise angetriebene Förderrollen, aufnimmt. Die Beschichtungsstation 7 umfaßt oberhalb der Werkstückführung 8 eine Spenderrolle 10 für einen Furnierstreifen 11 und eine der Streifenrückseite zugeordnete Kleberauftragseinrichtung 12 sowie im Bereich der Werkstückführung 8 eine Andrückeinrichtung 13 zum Andrücken des Furnierstreifens 11 an das Werkstück.

Die Furnierstreifen 11 bestehen aus einem Echtholzfurnier mit im wesentlichen geradliniger Jahrringzeichnung, welche Streifen an der Rückseite mit einem leimgetränkten Viskosevlies kaschiert und an der Vorderseite nach einem Schleifen mit einem Overlay beschichtet sind. Um diese kaschierten und beschichteten Furnierstreifen 11 auf die profilierte Sichtseite der Profilkörper 2 aufbringen zu können, wird der Furnierstreifen 11 vor dem Aufkleben über eine der Streifenoberseite zugeordnete Heizeinrichtung 14 der Beschichtungsstation 7 bis zum Erweichen der Overlayschicht erwärmt und dann während des Andrükkens in der Andrückeinrichtung 13 wieder bis zum Aushärten der Overlayschicht abgekühlt. Dazu weist die Andrückeinrichtung 13 Druckschuhe 15, 16 mit im Querschnitt an die zu beschichtende Profilkontur des Profilkörpers 2 angepaßten Druckflächen 17, 18 auf und diese beispielsweise aus Teflon bestehenden Druckschuhe 15, 16 sind mit einer Kühlvorrichtung 19, 20 in Form von kühlmittelbeaufschlagbaren Kühlkanälen u. dgl. zur Kühlung der Druckflächen 17, 18 ausgestattet. Dadurch werden die Furnierstreifen 11, die in ihrer Breite an die Länge der sichtseitigen Profilkontur des Profilkörpers angepaßt sind, gleichmäßig mittels der sich in Vorschubrichtung überlappenden Druckflächen 17, 18 der Druckschuhe an die Sichtseite der Profilkörper angedrückt und gleichzeitig während des Andrückens abgekühlt, so daß der Furnierstreifen durch die aushärtende Overlayschicht profilkonform versteift und ein nachgrägliches Ablösen nicht zu befürchten ist.

Nach dem Aufbringen der Furnierstreifen 11 auf die Profilkörper 2 können im gleichen Durchlauf mit Hilfe einer Schneideinrichtung 21 die über die Profilkontur überstehenden Randbereiche des Furnierstreifens 11 abgetrennt und die furnierten Profilkörper zu fertigen Profilleisten abgelängt werden.

## Patentansprüche

1. Verfahren zum Herstellen einer neuen Profilleiste, insbesondere Bodenleiste, die aus einem sichtseitig mit einer eine Furnierlage und eine transparente Decklage umfassenden Beschichtung versehenen Profilkörper besteht, nach dem eine aus Furnierblättern zusammengesetzte Furnierbahn nach einem Vlieskaschieren der einen Seite, der Rückseite, in Streifen mit einer an die Länge der sichtseitigen Profilkontur des Profilkörpers angepaßten Breite geschnitten wird, welche Furnierstreifen auf die Sichtseite der vorgefertigten Profilkörper unter Druckeinwirkung aufgeklebt werden, dadurch gekennzeichnet, daß Furnierblätter aus Echtholz mit vorzugsweise im wesentlichen geradliniger Jahrringzeichnung zur Furnierbahn aneinandergereiht werden, daß die Furnierbahn vor dem Streifenschneiden an der Vorderseite geschliffen und unter Hitze- und Druckeinwirkung overlaybeschichtet wird und daß dann die kaschierten und overlaybeschichteten Furnierstreifen vor dem Aufkleben auf die Profilkörper erhitzt und während des Andrückens an die Profilkörper wieder abgekühlt werden.

2. Vorrichtung zur Durchführung des Verfahrens nach Anspruch 1, mit einem Maschinengestell, das eine sich von einem Werkstückzulauf zu einer Beschichtungsstation erstreckende Werkstückführung und eine Vorschubeinrichtung für den Werkstückvorschub aufnimmt, wobei die Beschichtungsstation oberhalb der Werkstückführung eine Spenderrolle für einen Furnierstreifen und eine der Streifenrückseite zugeordnete Kleberauftragseinrichtung sowie im Bereich der Werkstückführung eine Andrückeinrichtung zum Andrücken des Furnierstreifens an die Werkstücke umfaßt, dadurch gekennzeichnet, daß in der Beschichtungsstation (7) zwischen Spenderrolle (10) und Andrückeinrichtung (13) eine der Streifenvorderseite zugeordnete Heizeinrichtung (14) vorgesehen ist und daß die Andrückeinrichtung (13) Druckschuhe (15, 16) mit im Querschnitt an die zu beschichtende Profilkontur der Werkstücke angepaßten Druckflächen (17, 18) aufweist, welche Druckschuhe (15, 16) mit einer Kühlvorrichtung (19, 20) zur Kühlung der Druckflächen (17, 18) ausgestattet sind.
